# EUROPEAN PATENT APPLICATION

(11) **EP 1 770 755 A2**
(43) Date of publication of application: **04.04.2007**
(21) Application number: 05028358.9
(22) Date of filing: 23.12.2005
(51) Int. Cl.: H01J 61/36, H01J 61/30, H01J 61/34, H01J 61/02, H01J 5/54, H01J 5/58, H01J 9/26, H01J 9/34, C03C 27/04, C03C 27/06, C03C 8/24, C04B 37/04

(54) **A lighting device, particularly a high-pressure metal halide lamp**

(30) Priority: 30.09.2005 DE 102005047006
(71) Applicant: Schott AG, 55122 Mainz (DE)
(72) Inventor: Bhosale, Rohit, 84028 Landshut (DE); Besinger, Jörn, Dr., 84032 Landshut (DE); Hettler, Robert, 84036 Kumhausen (DE); Gödeke, Dieter, Dr., 84028 Landshut (DE); Kiermayer, Susanne, 84058 Rottenburg (DE); Zimmerer, Claudia, 84051 Altheim (DE); Peuchert, Ulrich, Dr., 55294 Bodenheim (DE); Zachau, Thilo, Dr., 68642 Bürstadt-Riedrode (DE)
(74) Representative: Sawodny, Michael-Wolfgang

(57) **Abstract**

The invention is directed to a lighting device, particularly a high-pressure metal halide lamp wherein a material combination of the body, frit and base materials is selected such that
a. the Coefficient of Thermal Expansion of the material of the frit material (CTE_{frit}) matches with the Coefficients of Thermal Expansion of the material of the lamp base (CTE_{base}) and the material of the body (CTE_{body}), respectively,
or
b. the material of the frit (CTE_{frit}) bridges with the Coefflcients of Thermal Expansion of the material of the lamp base (CTE_{bass}) and the material of the body (CTE_{body}), respectively,
at least at the joining surfaces of the body, frit and base materials, to sustain a hermetic bonding and withstand pressure and temperature conditions.

## Description

### FIELD OF THE INVENTION

The present invention is directed to a lighting device, particularly a high-pressure metal halide lamp.

### BACKGROUND OF THE INVENTION

End users in the market become more and more interested in a uniform quality of the light source used. Therefore, high-pressure metal halide lamps attract attention in a variety of light application fields because they represent light sources emitting powerful light selectively point by point having a high white light quality. Compared with traditional halogen lamps they are more efficient and cost-saving.

High-pressure metal halide lamps generally have a discharge vessel or burner enclosed in a first body of ceramic or quartz containing in a gastight manner one or several metal halides, Hg and a rare gas filling. Such a discharge burner is, for example, described in WO 2004/077490 and WO 2005/033802. A second body surrounds the first body being particularly in form of a bulb, which has the function to thermally encapsulate the first body, the actual light emitting unit, and/or to protect the user against breaking or detrimental radiation, especially UV radiation. The second body, which end is left open, is fixed to a lamp base made of an electrically insulating material and two current supply members or pins are installed at or in the lamp base.

In most cases the space between first and second body is evacuated for the purpose of thermal isolation. Therefore, a tube for evacuating said space is provided in the lamp.

The burner of such a high-pressure metal halide lamp is operated with temperatures of 1000°C or more. Therefore and depending from a number of factors the temperature at the second body (outer body) is in the range from 300 to 850°C. Consequently, the materials used are absolutely demanding as well as the methods of producing the high-pressure metal halide lamps.

According to current bulb making processes the pinch glass is arranged around a light emitting unit and the base and bulb are fixed. The materials used are, for example, quartz for the bulb (e.g. silica glass) and for the pins and tube a conducting material. The lamp base is normally quartz. As assembly methods known in prior art the following are usually employed: (1) Flame Seal - sealing glass bulb around the lamp base using a high temperature flame: (2) Direct Seal - sealing the bulb directly to the lamp base without any flux or attaching medium; or (3) Solder Seal - sealing using a glass frit.

The critical problems of known high-pressure metal halide lamps are the dimensions of the lamps governed by wattage and geometry of the discharge vessel or burner and the length of the bonding zone of the lamp base with the outer second body or bulb.

Therefore, according to WO 2004/077490 a high-pressure metal halide lamp is described the outer body is made of quartz glass, hard glass or soft glass but it is not specified in detail. The lamp base is made from quartz glass, hard glass, soft glass, or a ceramic material, preferably a sintered body, preferably a glass, a glass-ceramic, or a ceramic body. The high-pressure metal halide lamp is characterized in that the outer envelope or body is fastened to the lamp base by means of an enamel of a (glass) frit. Preferably, the enamel is provided in the form of a previously shaped ring. Using a frit ring simplifies the manufacture of the high-pressure metal halide lamp whereby the fusing zone determined by the thickness of the base is reduced to a minimum, However the material of such a frit ring is not specified in detail in WO 2004/077490,

According to US 3 451 579 it is described a composite lamp article wherein the lamp is composed of a preformed hollow low thermal coefficient of expansion glass-ceramic envelope and a preformed radiant transmitting low expansion silica glass window, both having compatible low coefficients of thermal expansion not in excess of 25 x 10⁻⁷. The envelope and window are bonded by a vitreous copper containing seal glass consisting essentially of 78-80 mol-% SiO₂, 8-12 mol-% Al₂O₃ and 10-15 mol-% Cu₂O. Therefore, the build-up and composition of the lamp described is different vls-à-vls the present invention.

Therefore, it is an object of the present invention to provide a lighting device, particularly a high-pressure metal halide lamp which minimizes the above-mentioned problems, allows to maintain the desired light quality and having improved reliability and service life. Also a simple process for manufacturing should be provided.

### DESCRIPTION OF THE INVENTION

The above-mentioned object is solved by a lighting device, particularly a high-pressure metal halide lamp, comprising:
- a light emitting unit,
- a body surrounding the light emitting unit, preferably in form of a bulb,
- a lamp base comprising at least one current supply or pin,
the lamp base being connected with the body via a frit material in a gas-tlght manner,
wherein a material combination of the body, frit and base materials is selected such that
a. the Coefficient of Thermal Expansion of the material of the frit material (CTE_{frit}) matches with the Coefficients of Thermal Expansion of the material of the lamp base (CTE_{base}) and the material of the body (CTE_{body}), respectively,
or
b. the material of the frit (CTE_{frit}) bridges with the Coefficients of Thermal Expansion of the material of the lamp base (CTE_{base}) and the material of the body (CTE_{body}), respectively,
at least at the joining surfaces of the body, frit and base materials, to sustain a hermetic bonding and withstand pressure and temperature conditions.

Surprisingly, it has been found that a material combination for a lighting device, particularly a high-pressure metal halide lamp, may be selected in a manner which allows for an improved reliability and durability in service and at the same time meets the outstanding requirements, particularly those of a high-pressure metal halide lamp. In a high-pressure metal halide lamp the above-mentioned lamp body is preferably the second or outer body, which surrounds the first or inner body which comprises the light emitting unit,

Therefore, the materials of frit, lamp base and body are selected or adjusted to each other under consideration of the Coefficients of Thermal Expansions, respectively. Therefore, the lamp base can be attached to the lamp body with the help of a frit material which may match the Coefficient of Thermal Expansion (CTE) of both, the material of the body and said of the lamp base (variant a.) or it may bridge the CTE of both materials (variant b.), to sustain a hermetic bond and withstand pressure and temperature conditions, particularly in high-pressure metal halide lamps.

In such a manner the CTEs create the desired gas-tight sealing and enclosure over a long time of operation. As a matter of rule thermal expansion coefficients α_{20/300} in the range of about 0 to about 10 ppm/K may be selected,

According to embodiment a. of the present invention the CTE of the material of the lamp base, the CTE of the material of the lamp body and the CTE of the material of the frit may be equal, e.g. the materials of body/frit/base chosen comprise all zero expansion. If all CTE values of all three materials used are equal, it applies CTE_{body} = CTE_{base} = CTE_{frit}. However, in most cases, the CTEs of the materials chosen are rather essentially equal or very similar. If all CTE values are essentially equal or very similar, it applies CTE_{body} ∼ CTE_{base} ∼ CTE_{frit}. According to the frame of the present invention the term "to match" "essentially equal" or "very similar" should be understood to mean that the CTE-values are selected starting from a predetermined CTE value for one material and selecting the other materials depending thereon, for example given CTE value ± 1 ppm/K, preferably CTE value ± 0.8 ppm/K, more preferably CTE value ± 0.5 ppm/K, most preferably CTE value ± 0.25 ppm/K, particularly CTE value ± 0.1 ppm/K. Example: the given CTE of the material of the lamp base is 4.7 ppm/K, then the CTE of the body and the frit material should be selected to be in the range from (given CTE value ± 1 ppm/K) 3.7 to 5.7 ppm/K, preferably in the range from (given CTE value ± 0.5 ppm/K) 4.2 to 5.2 ppm/K.

According to embodiment b. of the present invention the frit material may be adjusted to mediate between on one hand the CTE of the lamp base material and on the other hand the CTE of the lamp body material. Then, the thermal expansion coefficient of the lamp base material and said of the lamp body are different such as CTE_{body} < or > CTE_{base}, whereby the frit material is one which levels out or represents a balance between the different thermal expansion coefficients. Preferably the frit material implies a thermal expansion coefficient which is within the thermal coefficients of the body and base materials and/or the frit material is provided in an appropriate thickness D. The difference of the thermal expansion coefficients of the body material/base material should preferably not exceed 2 ppm/K, more preferably 1.5 ppm/K, most preferably 1 ppm/K. For example it applies: CTE_{body} < CTE_{base}, whereby CTE_{frit} ≤ CTE_{base} and CTE_{frit} ≥ CTE_{body}. The differences are leveled out by the frit material.

Due to the possibility of adjusting the bonding or joining temperature, the frit materials used may have higher or lower values as the above given values.

Only if taking the above-mentioned conditions into account the objective of the present invention may be achieved,

The sealing of the system lamp body/frit/lamp base is sufficient hermetically tight and stabile preferably to temperatures T ≥ 350°C, more preferably T ≥ 450°C.

The lamp base material is not further limited insofar it is suitable to be used in the present technical field. Such materials may be electrically conductive or insulating materials. Exemplarily metals or ceramic materials such as kovar, alloy 42, aluminum nitride and the like can be used. Preferably, the lamp base is in the form of a plate.

The current supplies or contact members such as pins and exhaust or feeding tubes present in the lamp are also not limited, but they can be made out of standard metals matched to the lamp base material e.g. kovar, alloy 42. Further, it is a matter of course that the materials of the lamp base and the materials of the pin(s) und tube(s) should be suitable to provide them with standard sealing methods such as glass-to-metal-seals. According to the present invention the current supplies or pins are conducting media or electrodes on which the light emitting unit can be mounted. In a further inventive embodiment the lamp base material, in case it is conducting, may act as one electrode itself and only one pin isolated from the base yet sealed hermetically is required.

The electrical contact pins as mentioned above which are sealed hermetically and isolated from the lamp base are sealed using prior art such as a glass-to-metal-seal. It is possible to calculate the diameter of the sealing, e,g. a glass seal, to have appropriate creep resistance for the conducting pln/electrode.

It should also be noted that the base material should have at least, if not more, one tube sealed in to evacuate the atmosphere inside or fill gas inside the lamp body or bulb after the sealing. This tube could be pinched off or welded off after the required operation is completed. The tube can also be replaced by just a hole in the base and can be welded off with a ball attachment method or other similar techniques involving solder glass.

The frit material may be selected from glass or metal materials and can specially be lead free to comply with the environmental requirements. The frit material may be a passivating material which may not be attacked by any of the gases (reactive atmosphere) contained in the (second) body or enclosure bulb, Preferably the frit material is an anorganic material on glass or glass ceramic basis. Exemplary frit materials are glass materials such as Pb-bomte composite glasses, for example containing fillers which are able to decrease the thermal expansion coefficient. Further examples are lead free Bi-Zn-borate composite glasses.

The frit material is also envisioned to be high temperature resistant e.g. having a Tg over 500°C to maintain a hermetic seal over the operating temperature of the bulb.

The metal materials used as frit materials may be known soldering metals such as CuAgPd or AuSn.

The form of the frit material is not especially limited, it is preferably adapted to the form and Joining surfaces of the body and base to be bonded. Therefore, it is possible, depending from the frit material in the starting condition, to use very limited bonding or joining zones and malting areas. The frit material may be in form of a ring in the starting condition.

Also the form of the body or bulb is not further limited which usually contains or consists of glass or glass ceramics which can be picked from a variety of glass or glass ceramic materials to match or bridge between the combination of base and frit materials.

Type and dimension of the materials to be bonded allow for a selection of different combinations of materials being identical or different in order to produce a hermetic bonding of body/frit/base. According to the present invention suitable materials to be bonded or joined must be chosen depending from their thermal expansion coefficients CTE (in ppm/K), the materials may be classified in different types. Materials of the same or different types may be combined unless the above requirements with regard to the CTE values are fulfilled:
a) type 1 materials having a low thermal expansion or a thermal expansion being zero; 0 ≤ CTE_{20/300} ≤ 1.3 ppm/K:
b) type 1gr materials having a gradient (functionally graded materials); 0 ≤ CTE_{20/300} ≤ 5 ppm/K, the later bonding or joining surface having a low expansion such as zero;
c) type 2 materials having expansions in the range of 1,3 ≤ CTE_{20/300} ≤ 3.5 ppm/K;
d) type 3 materials having expansions in the range of 3.5 ≤ CTE_{20/300} ≤ 5.5 ppm/K;
e) type 3gr materials having a gradient (functionally graded materials); 5 ≥ CTE_{20/300} ≥ 0 ppm/K, the later bonding or Joining surface having a high expansion such as CTE_{20/300} - 4.0 ppm/K;
f) type 4 materials having expansions in the range of 5.5 ≤ CTE_{20/300} ≤ 9 ppm/K,

Materials having a thermal expansion coefficient of CTE ~ 0 ppm/K are for example transparent lithium aluminosilicate (LAS) glass ceramics having a main crystalline phase of high quartz mixed crystals such as Robax^{®} or Zerodur^{®} (trademarks of Schott AG, Mainz).

An example of a material having a CTE - 0.5 ppm/K is silicate glass SiO₂.

Materials having a thermal expansion coefficient - 1.0 ppm/K are, for example, translucent lithium aluminosilicate (LAS) glass ceramics having a main crystalline phase of keatite mixed crystals.

Materials classified as type 1gr may be, for example, lithium aluminosilicate (LAS) glass ceramics being partially ceramic. These materials are locally ceramic lithium aluminosilicate LAS glass ceramics with an annular outer portion of glass ceramics and a radial inwardly green glass structure. Said material has a gradient being of type 1gr. Such a material may have the following composition (in weight-% on oxide basis):

| | |
|---|---|
| SiO₂ | 50 - 70 |
| Al₂O₃ | 17 - 27 |
| Li₂O | > 0 - 5 |
| Na₂O | 0-5 |
| K₂O | 0-5 |
| MgO | 0-5 |
| ZnO | 0-5 |
| TiO₂ | 0 - 5 |
| ZrO₂ | 0-5 |
| Ta₂O₅ | 0-8 |
| BaO | 0-5 |
| SrO | 0-5 |
| P₂O₅ | 0-10 |
| Fe₂O₃ | 0-5 |
| CeO₂ | 0 - 5 |
| Bi₂O₃ | 0-3 |
| WO₃ | 0-3 |
| MoO₃ | 0 - 3 |

as well as purifying agents in the amount of 0 - 4 wt.-%.

As materials of type 2, i.e. materials having expansions in the range of 1.3 ≤ CTE_{20/300} ≤ 3.5 ppm/K the following transition glasses of types 8228, 8229, 8230 of the applicant (Schott AG), listed in the following table, may be used (cf. DE 103 48 466).

| Oxide in (%) | 8228 | 8229 | 8230 |
|---|---|---|---|
| SiO₂ | 82.1 | 87.0 | 83.6 |
| B₂O₃ | 12.3 | 11.6 | 11.0 |
| Al₂O₃ | 5.3 | --- | 2.5 |
| Na₂O | --- | 1.4 | 2.2 |
| K₂O | --- | --- | 0.3 |
| Purifying agent | 0.05-0.2 | 0.05-0.2 | 0.05-0.2 |
| Alpha (x10⁻⁶) | 1.3 | 2.0 | 2.7 |

Also DURAN 8330 is a possible material (CTE = 3.3 ppm/K) having the following approximate composition:

| | |
|---|---|
| SiO₂ | 81 wt.-% |
| B₂O₃ | 12.8 wt.-% |
| Al₂O₃ | 2.4 wt.-% |
| Na₂O | 3.3 wt.-% and |
| K₂O | 0.5 wt.-%. |

The glasses 8228, 8229, 8230 and 8330 mentioned above comprise a glass composition range (wt.-%) of about 80% to about 90% SiO₂, about 0 to about 15 wt.-% B₂O₃, about 0 to about 10 wt.-% Al₂O₃, and less than 5% R₂O, wherein the total content of B₂O₃ and Al₂O₃ is about 7% to about 20% and R is an alkali metal of the group consisting of Li, Na, K, Rb and Cs.

Examples of materials having expansions in the range of CTE_{20/300} = 3.5 to 5,5 ppm/K (type 3) may be the following:
a) Fe-Nl-Co-Alloys, e.g. alloys such as Vacon 11^{®} of CRS Holdings Inc., also known as "KOVAR" or alloy 42. The Fe-Nl-Co alloys have preferably thermal expansion coefficients between 3.5 ppm/K and 5.5 ppm/K depending from the composition of the alloy (e.g. KOVAR, alloy 42);
b) Mo or doped Mo having an expansion coefficient CTE of about 5.2 ppm/K;
c) W oder doped W having a CTE of about 4.4 ppm/K;
d) hard glasses, e.g. glass 8253 of SCHOTT having the following approximate composition in wt.-%:

| | |
|---|---|
| SiO₂ | 59.79 |
| Al₂O₃ | 16.52 |
| B₂O₃ | 0.30 |
| CaO | 13.52 |
| BaO | 7.86 |
| ZrO₂ | 1.00 |
| TiO₂ | 1.00 |
| Alpha 20/300 | 4.73 ppm/K |
| Tg | 791 °C |
| Density | 2.66 g/cm3 |

e) borosilikate glass, e.g. SUPRAX 8488 with a CTE_{20/300} - 4.3 ppm/K or glass 8250 with a CTE_{20/300} ~ 5.0 ppm/K;
f) starting glass of lithium aluminosilikate (LAS) glass ceramic type ROBAX^{®} or Zerodur^{®} (no ceramic) having a CTE- 3.5 - 5.0 ppm /K;
g) magnesium aluminosilikate (MAS) glass ceramics having the following composition (in wt.-% on oxide basis);

| | |
|---|---|
| SiO₂ | 35 - 70, particularly 35 - 60 |
| Al₂O₃ | 14 - 40, particularly 16.5 - 40 |
| MgO | 0 - 20, preferably 4 - 20, particularly 6 - 20 |
| ZnO | 0 - 15, preferably 0 - 9, particularly 0 - 4 |
| TiO₂ | 0 - 10, preferably 1 -10 |
| ZrO₂ | 0 - 10, preferably 1 -10 |
| Ta₂O₅ | 0 - 8, preferably 0 - 2 |
| BaC | 0 - 10, preferably 0 - 8 |
| CaO | 0 - < 8, preferably 0 - 5, particularly < 0,1 |
| SrO | 0 - 5, preferably 0 - 4 |
| B₂O₃ | 0 - 10, preferably > 4 -10 |
| P₂O₅ | 0 - 10, preferably < 4 |
| Fe₂O₃ | 0 - 5 |
| CeO₂ | 0 - 5 |
| Bl₂O₃ | 0 - 3 |
| WO₃ | 0 - 3 |
| MoO₃ | 0 - 3 |

as well as ususal purifying agents, e,g. SnO₂, CeO₂, SO₄, Cl, As₂O₃ Sb₂O₃, in amounts of 0 - 4 wt.-%.

Materials of type 3gr contain materials having a gradient (functionally graded materials) which posesses local different expansion coefficients CTF-_{20/300} between 0 and 4 ppm/K. Such materials may be produced e,g. from a starting material using a convenient process control, for example, the starting material may be a glass ceramic of the type LAS. An example of a local ceramic tubular element having a terminal green region is known from WO 2005/066088.

Examples of materials having an expansion in the range of CTE_{20/300} between 5.5 und 9.0 ppm/K, inclusive, are (type 4):
a) Al₂O₃ ceramics;
   6 ≤ CTE_{20/300} ≤ 8 ppm/K;
b) lithium aluminosilikate glass ceramics with the main crystalline phase of lithium disilikate;
   CTE_{20/300} about 9.0 ppm/K;
c) Gopper-Glad Ni-Fe Wire;
   CTE_{20/300} axial 8.5 ppm/K;
d) YAG ceramics;
   CTE_{20/300} about 8 ppm/K,

Hermetically tight systems may be obtained by materials of one type of groups mentioned above or of materials selected of different types of materials. The following material combinations of lamp body material/lamp bass material are preferred, whereby the material of the frit is preferably a glass material selected with regard to the chosen body matedal/base material accordingly. The frit material may, for example, be selected from Pb-borate composite glasses, optionally having added fillers, lead free Bi-Zn-Borat composite glasses or glasses on phosphate basis. In the examples further preferable material combinations are described.

Preferred material combinations lamp body material/frit material/lamp base material which are selected from the above described types of materials may be the following:

### Embodiment a.:

- a material of type 1 / a material of type 1 (lamp body/lamp base)
- a material of type 1 gr / a material of type 1 gr (lamp body/lamp base)
- a material of type 2 / a material of type 2 (lamp body/lamp base)
- a material of type 3 gr / a material of type 3 gr (lamp body/lamp base)
- a material of type 3 / a material of type 3 (lamp body/lamp base) illustrative Examples:
   MAS glass ceramics / KOVAR or alloy 42;
   hard glass / KOVAR or alloy 42;
   hard glass / hard glass;
   borosilikate glass, e.g. Schott type glass 8488 (SUPRAX) / alloy 42 or KOVAR;
   borosilikate glass, e.g. Schott type glass 8488 (SUPRAX) / borosilicate glass, e.g, glass type 8250;
- a material of type 4 / a material of type 4 (lamp body/lamp base)

### Embodiment b.:

- a material of type 1 gr / a material of type 3 (lamp body/lamp base) Illustrative Examples:
   locally ceramic LAS-glass ceramics / alloy 42 or KOVAR;
- a material of type 3 / a material of type 1 gr (lamp body/lamp base)
- a material of type 1 gr / a material of type 1 (lamp body/lamp base) Illustrative Examples:
   partially ceramic LAS glass ceramics with high quartz mixed crystal / LAS glass ceramics;
- a material of type 3 gr / a material of type 3 (lamp body/lamp base) Illustrative Examples:
   partially ceramic LAS glass ceramics / alloy 42 or KOVAR:
- a material of type 1 / a material of type 3 (lamp body/lamp base) Illustrative Examples:
   transparent LAS high quarz mixed crystalline phase / KOVAR, alloy 42:
   partially ceramic LAS glass ceramics with high quartz mixed crystal / LAS glass ceramics.

Therefore, it is provided a specific combination of materials from which the lamp base, frit material and second body material are preferably selected in order to achieve a lighting device, particularly a high-pressure metal halide lamp, having improved characteristics.

The lighting device or high-pressure metal halide lamp of the present invention may be produced according to any known method in prior art.

In order to obtain a tight and stable bonding or joining between lamp body and lamp base a joining or soldering method may be conducted using the frit material as a soldering material wherein the components are bonded due to diffusion effects. The melting temperature of the frit materials is lower than said of the other materials, preferably it is in the range of about 200 to 700°C. Using a base comprising Fe-Ni alloys (KOVAR, ALLOY 42) the melting temperature of the frit material should not exceed 600°C, ideally not exceed 500°C.

The joining or soldering method can be realized by the following processes:
a) in thermal manner, e.g. heater
b) by short-wave infrared radiation
c) by laser melting
d) by high frequeny heating.

According to item b) the melting is conducted in an optical manner. Optical heating elements have the advantage to melt glass in a very short time, the heating is not achieved by heating the surface and heat transportation but the volume is heated directly. Therefore, stress and strain thermally induced in thicker samples may be avoided.

In prior art the use of short-wave infrared radiation is described, but not in connection with the bonding or joining of frit material with a lamp body and lamp base, For example, DE 199 38 807, DE 199 38 808, DE 199 38 811 as well as DE 101 18 260 may be mentioned, the disclosures thereof are incorporated by reference.

However, in the present invention, it is also provided another method of joining the lamp body or bulb to the lamp base material according to which the body material is metallised at the bottom with suitable material e.g. gold, silver etc. and the lamp base is plated with materials like Ni and/or Au and the bond may be achieved by standard metal solders like CuAgPd, AuSn etc. A further sealing method can be performed as mentioned above by using short-wave-IR-irradiatlon or a laser or the like,

Furthermore, any sealing method known in prior art may be employed. However, it is preferred that the lamp base can have a geometry so that the lamp body or bulb is adjusted concentric to the at least one current supply or pin in order to avoid any alignment process steps later on. The frit or the metal solder can be deposited by appropriate method e.g. dispensing, preforms, etc. The lamp body or bulb can be held onto the lamp base with or without pressure depending on the method of attachment and then sealed in either inert atmosphere (e.g. nitrogen) or vacuum.

### The advantages of the present invention are manifold:

The selection of material combinations under consideration of the coefficients of thermal expansion of the materials of the lamp body, the lamp base, and the frit material results in a significant improvement of the reliability, safety and durability of a lighting device such as a high-pressure metal halide lamp in service.

The purposive selection or adjustment of the materials results in the optimum fit at room temperature as well as under the demanding high temperature and pressure conditions of such lamps, Therefore, breakdown and tendency to develop faults during operation are less likely to occur. Mechanical stress or strain due to different deformation of materials used in operation does not appear and the risk of leaking in use is reduced to a minimum or avoided.

The form of the frit material is not especially limited, it is preferably adapted to the form and Joining surfaces of the body and base to be bonded. Therefore, it is possible, depending from the frit material in the starting condition, to use very limited bonding or joining zones and melting areas.

Further, the process according to the present invention provides for a process time reduction - as the light emitting unit can always be centered inside the second body or bulb if a conducting pin sealed in the lamp base is sealed at the center and the light emitting unit is attached to this pin.

In the present invention it is further achieved a reduction of number of parts in the assembly for cost saving - the final assembly would consist of a preassembled lamp base, attaching medium and the (second) body or bulb. Further need for housings to form "bayonet" kind of attachment is completely eliminated. A Bayonet type geometry on the lamp base may reduce the number of parts and also the final size of the assembly.

### Examples

The invention described will now be illustrated by the Examples which follow various other embodiments and will become apparent to the skilled person from the present specification. However, it is expressly pointed out that the Examples are intended solely as an illustration and should not be regarded as restricting the invention.

### Embodiment a.

According to one embodiment of the present invention the thermal expansion coefficients of the lamp body, base and frit materials are adjusted to each other, whereby CTE_{body} = CTE_{base} = CTE_{frit} or CTE_{body}∼CTE_{base}∼CTE_{frit}.

In the following the material combinations of the body and base materials will be described in detail, whereas it is within the skill of the expert in this technical field to choose the frit material accordingly.

The following material combinations may be used at least in the bonding or Joining area of the materials.

### Example 1:

- the materials of the body or base may be selected from materials of type 3 gr having a CTE between 4 and 0 ppm/K, whereby the zone having a CTE - 4 is within the bonding or joining area of the materials and the other material (body or base material) is a material of type 3 having an expansion in the range of CTE = 3.5 to 5.5 ppm/K;

### Example 2:

- the materials of the bulb and base may be selected from materials of type 3 having an expansion in the range of CTE_{20/300} = 3.5 to 5.5 ppm/K.
Specific material examples of combinations of body and base materials are as follows:
a) (to Example 1) lamp body or base, preferably the body material, of partially ceramic LAS-glass ceramics; the base material of alloy 42 or KOVAR;
b) (to Example 2) lamp body or base material, preferably body material, of MAS glass ceramics;
   the base material of KOVAR or alloy 42;
c) (to Example 2) lamp body or base material, preferably body material, of hard glass;
   the base material, of KOVAR or alloy 42;
d) (to Example 2) lamp body or base material, preferably body material, of borosilikate glass, e.g. Schott type glass 8488;
   the base material of alloy 42 or KOVAR.

For example the following material combinations may be used at least in the bonding or joining area of the materials. The following embodiments show examples for materials the thermal coefficients are equal or very similar to each other (embodiment a.):

### Example 3:

- the materials of the lamp body or base having a gradient with a CTE between 4 and 0 ppm/K and the other material (body or base) to be bonded having an expansion in the range of CTE = 3.5 to 5,5 ppm/K:

### Example 4:

- lamp body and base material with an expansion in the range of CTE = 3.5 to 5.5 ppm/K;

Specific material examples of the base and body material combinations are as follows:
a) the body material of partially ceramic LAS glass ceramics;
   the base material of alloy 42;
b) the body material of MAS glass ceramics;
   the base material of KOVAR or alloy 42;

### Embodiment b.

The following embodiments of the present invention show the use of materials having different expansion coefficients, e.g. the materials are selected from different types of materials as classified above. The thermal expansion coefficients of the lamp base material and the lamp body material, repectively, are different such as, for example, CTE_{body} < CTE_{base}, whereby the frit material is one which levels out or represents a balance between the different thermal expansion coefficients. Preferably the frit material implies a thermal expansion coefficient which is within the thermal coefficients of the lamp bulb and base materials and/or the frit material is provided in an appropriate thickness D.

By adjusting the bonding or joining temperature it is also possible to use frit materials being higher or lower than the above-mentioned values. The difference of the thermal expansion coefficient should preferably not exceed 1 ppm/K.

### Example 5:

- the material of the lamp body or base having zero or low thermal expansion with 0 ≤ CTE ≤ 1.3 ppm/K and the other material of the base or the body material having an expansion in the range of CTE = 3.5 to 5.5 ppm/K;

### Example 6:

- the material of the body or the base having a gradient with CTE between 4 and 0 ppm/K (higher expansion at the bonding or joining site) and the other material to be bonded (body or base material) having an expansion in the range of CTE = 3.5 to 5.5 ppm/K;

### Example 7:

- the materials of the body and base having an expansion in the range of CTE = 3.5 to 5.5 ppm/K;

Specific material examples of the body / base material combinations are as follows:
a) the body material of partially ceramics LAS glass ceramic or LAS-glass ceramics having a high quartz mixed crystalline phase;
   the base material of alloy 42 or KOVAR;
b) the body material of MAS glass ceramics;
   the base material of KOVAR or alloy42;
c) the body material of hard glass, e.g. Schott type 8253;
   the base material of KOVAR or alloy 42;
d) the body material of borosilikate glass, e.g. Schott type 8488 (SUPRAX);
   the base material of alloy 42 or KOVAR;
e) lamp body and base material of hard glass, e.g. SCHOTT type 8253;
f) lamp body and base material of borosilikate glass, e.g. body material of Schott type 8488 (SUPRAX);
   the base material of glass type 8250.

The frit material may be usually Pb-borate composite glasses having added fillers which may decrease the thermal expansion coefficient. Also expansion adapted lead free Bi-Zn-Borat composite glasses or glasses on phosphate basis may be used.

Especially frit materials having the following properties may be used: Frit material A (CTE_{20/300} ∼ 4.4 ppm/K; Tg - 325°C; T_{joining}; -440°C) or frit material B (CTE_{20/300} ∼ 5.6 ppm/K; Tg ∼ 445°C; T_{joining}; 540°C - 570°C)

According to the following embodiments materials having different thermal expansion coefficients may be used. The differences are leveled out by the frit material. It applies CTE_{body}≤CTE_{base}, whereby CTE_{frit} ≤CTE_{body} and CTE_{frit}≥CTE_{bulb}.

The following material combinations may be used:

### Example 8:

- the material of the lamp body or base having a gradient with a CTE between 4 and 0 ppm/K and the further material to be bonded (base or body) having an expansion in the range of CTE = 3,5 to 5.5 ppm/K

Specific material combinations are the following;
- the lamp body of partially ceramic LAS glass ceramics;
   the base material of alloy 42;

The following material combinations may also be used:

### Example 9:

- lamp base or body material having a gradient with a CTE between 4 and 0 ppm/K and the further material to be bonded (body or base) having an expansion in the range of CTE = 0 to 1.3 ppm/K.

Specific Examples of material combinations are the following:
- the body material of partially ceramic LAS glass ceramics with high quartz mixed crystal;
   the base material of LAS glass ceramics.

The invention described will now be illustrated by the following Drawings which follow various embodiments and will become apparent to the skilled person from the present specification. However, it is expressly pointed out that the Drawings and description are intended solely as an illustration and should not be regarded as restricting the invention.

### In the Drawings

- Figure 1: shows a three-dimensional schematic view of an upper part of a lighting device according to the present invention and
- Figure 2: shows a sectional schematic view of a bottom part of a lighting device according to the present invention.

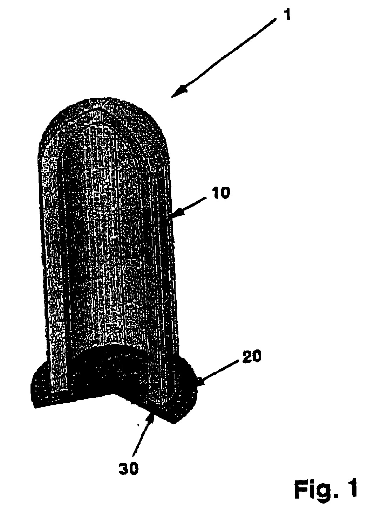

Referring to Figure 1 a second body or bulb 10 is shown which is connected with a lamp base 20 via a frit ring 30. The second body 10 surronds a first body (not shown) comprising a light emitting unit. The space between first and second body 10 is preferably evacuated. As a matter of course the geometry shown in Figure 1 is not limited to the form of the second body or bulb 10 illustrated but any geometry possible known for those skilled in the art may be used. The required thickness of the second body 10 may be calculated based on requirements of inside pressure and operating temperature of the designed second body or bulb 10.

The second body or bulb 10 is normally composed of glass which can be picked from a variety of glass materials to match the combination of base and frit material. The lamp base material 20 is selected from electrically conductive or insulating materials such as metals or ceramic materials, for example kovar, alloy 42, aluminum nitride, etc. in Figure 1 the lamp base 10 is in the form of a plate,

The frit material 30 may be selected, for example, from glass, glass ceramics, metal, particularly a passivating material, which is not attacked by the reactive gas atmosphere contained in the second body or enclosure bulb 10.

The CTE's of the materials of the second body or bulb 10, the frit 30 and the lamp base 20 are selected according to the present invention, i.e. are either within nearly the same value or the material of the frit material 30 bridges between the materials of the second body 20 and the lamp base 10 in such a manner that the CTE is balanced or compensated between both other materials. Therefore, a hermetic seal over the operating temperature of the lamp 1 is maintained and the occurence of additional stress is avoided.

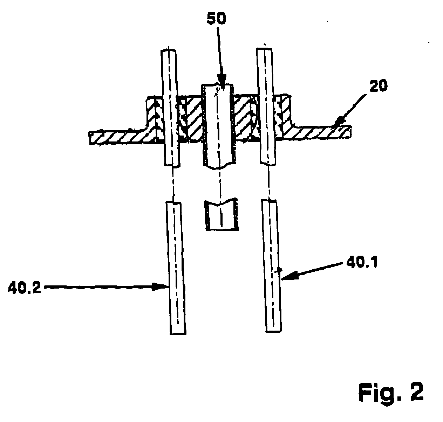

In Figure 2 a sectional schematic view of a bottom part of a lighting device according to the present invention, particularly an example of a high-pressure metal halide lamp is shown as follows (The same reference numbers indicate the same elements as in figure 1):

A lamp base 20, for example made out of alloy 42, having according to the present embodiment a CTE of 4.6 ppm/K, is designed with a plateau to seal a second body 10 or bulb around it (not shown). This lamp base material 20 has two pins 40.1 and 40.2. particularly made from kovar, sealed into the lamp base 20 as shown in Figure 1, for example with glass preforms, to form a hermetic seal. A tube 50, for example made out of kovar, is preferably be provided at the center of the second body or bulb 10 for inlet and outlet of required gases. This tube 50 could be sealed by means of solder materials, for example, like Copper-Sliver-Palladium. The entire assembly is completely hermetic in the seal areas and joints.

For example as shown in Figure the second body or bulb 10 can be made out of glass, e.g. hard glass, having a composition as described above and having a CTE value of 4.7 ppm/K. The required thickness of the glass could be calculated based on requirements of inside pressure and operating temperature of the designed second body or bulb 10.

The frit material 30, e.g. glass, for the sealing of the second body 10 or bulb, e.g. of glass, to the lamp base 20, e.g. of metal, may be Schott solder glass GO 18-225, which is, for example, a lead containing glass with a matched CTE of 5 ppm/K which is matched to Alloy 42. Preforms can be made out of this glass with an inner diameter similar to the base plateau diameter to fit around it.

Once the required light emitting unit such as a filament (not shown) is mounted and attached to the two electrodes (not shown) the second body or bulb 10 can be placed over the lamp base 20 on the pre-placed frit ring 30 (not shown) and then sealed with the appropriate sealing profile to achieve a stable hermetic bond. It may be important to seal the assembly in an inert atmosphere like nitrogen to avoid oxidization of the light emitting unit. Once the sealing is done, the enclosure formed by the second body or bulb 10 and lamp base 20 can be filled with required gas and the tube 50 can be pinched off thus completing the assembly and achieving a completely hermetic enclosure for a lighting application.

## Claims

1. A lighting device, particularly a high-pressure metal halide lamp, comprising:
- a light emitting unit;
- a body surrounding the light emitting unit, preferably in form of a bulb,
- a lamp base comprising at least one current supply or pin,
the lamp base being connected with the body via a frit material in a gas-tight manner,
wherein a material combination of the body, frit and base materials is selected such that
a. the Coefficient of Thermal Expansion of the material of the frit material (CTE_{frit}) matches with the Coefficients of Thermal Expansion of the material of the lamp base (CTE_{base}) and the material of the body (CTE_{body}), respectively,
or
b. the material of the frit (CTE_{frit}) bridges with the Coefficients of Thermal Expansion of the material of the lamp base (CTE_{base}) and the material of the body (CTE_{body}), respectively,
at least at the joining surfaces of the body, frit and base materials, to sustain a hermetic bonding and withstand pressure and temperature conditions.

2. The lighting device as claimed in claim 1, **characterized in that** the body, base and frit material are selected to have the same (CTE_{body} = CTE_{base} = CTE_{frit}) or essentially the same (CTE_{body} ∼ CTE_{base} ∼ CTE_{frit}) thermal expansion coefficients in order to meet condition a, in claim 1.

3. The lighting device as claimed in any one of the preceding claims 1 or 2, **characterized in that** one CTE value is selected as fixed value and the other two CTE values are determined accordingly as follows: given CTE value ± 0.8 ppm/K, preferably given CTE value ± 0.5 ppm/K, more preferably given CTE value ± 0.25 ppm/K, particularly given CTE value ± 0.1 ppm/K.

4. The lighting device as claimed in any one of the preceding claims 1 to 3, **characterized in that** the body and base material consist of a zero expansion or low expansion material having a thermal expansion coefficient of 0 ≤ CTE_{20/300} ≤ 1.3 ppm/K.

5. The lighting device as claimed in any of the preceding claims 1 to 3, **characterized in that** the body and base material consist of a material with a gradient having a thermal expansion coefficient in the range of 0 ≤ CTE_{20/300} ≤ 5 ppm/K. the resulting bonding surface thereof having a low expansion, e.g a zero expansion.

6. The lighting device as claimed in any one of the preceding claims 1 to 3, **characterized in that** the body and base material consist of a material having a thermal expansion coefficient in the range of CTE_{20/300} = 1.3 to 3.5 ppm/K.

7. The lighting device as claimed in any one of the preceding claims 1 to 3, **characterized in that** the body and base material consist of a material having a thermal expansion coefficient in the range of CTE_{20/300} = 3.5 to 5,5 ppm/K.

8. The lighting device as claimed in any of the preceding claims 1 to 3, **characterized in that** the body and base material consist of a material with a gradient having a thermal expansion coefficient in the range of 5 ≥ CTE_{20/300} ≥ 0 ppm/K, the resulting bonding surface thereof being high expanding, e.g, CTE_{20/300} ∼ 4,0 ppm/K.

9. The lighting device as claimed in any one of the preceding claims 1 to 3, **characterized in that** the body and base material consist of a material having a thermal expansion coefficient in the range of CTE_{20/300} = 5.5 to 9 ppm/K.

10. The lighting device as claimed in claim 1, **characterized in that** the body and base materials are selected to have different thermal expansion coefficients (CTE_{body} ≠ CTE_{base}) in order to meet condition b. in claim 1.

11. The lighting device as claimed in claim 10, **characterized in that** the thermal expansion coefficient of the frit material is between the thermal expansion coefficient of the body and the thermal expansion coefficient of the base material and/or the frit material is provided in an appropriate thickness D.

12. The lighting device as claimed in claims 10 or 11, **characterized in that** the difference between CTE_{body} and the CTE_{base} should not exceed 2 ppm/K, preferably should not exceed 1.5 ppm/K, particularly should not exceed 1 ppm/K.

13. The lighting device as claimed in claim 10, 11 or 12, **characterized in that** the body or base material consists of a material having a zero expansion or low expansion with a thermal expansion coefficient in the range of 0 ≤ CTE_{20/300} ≤ 1,3 ppm/K,

14. The lighting device as claimed in claims 10, 11 or 12, **characterized in that** the body or base material consists of a material with a gradient having a thermal expansion coefficient in the range of 0 s CTE_{20/300} ≤ 5 ppm/K, the resulting bonding surface thereof having a low expansion, e.g. zero expansion,

15. The lighting device as claimed in claims 10, 11 or 12, **characterized in that** the body or base material consists of a material having a thermal expansion coefficient in the range of CTE_{20/300} = 1.3 to 3.5 ppm/K.

16. The lighting device as claimed in claims 10, 11 or 12, **characterized in that** the body or base material consists of a material having a thermal expansion coefficient in the range of CTE_{20/300} = 3.5 to 5.5 ppm/K,

17. The lighting device as claimed in claims 10, 11 or 12, **characterized in that** the body or base material consists of a material with a gradient having a thermal expansion coefficient in the range of 0 ≤ CTE_{20/300} ≤ 5 ppm/K, the resulting bonding surface thereof having a high expansion, e.g. CTE_{20/300} ∼ 4,0 ppm/K.

18. The lighting device as claimed in claims 10, 11 or 12, **characterized in that** the body or base material consists of a material having a thermal expansion coefficient in the range of CTE_{20/300} = 5.5 to 9 ppm/K.

19. The lighting device as claimed in any one of the preceding claims 1 to 18, **characterized in that** the frit material is anorganic and the hermetic bond may withstand temperatures up to ≥ 350°C, preferably ≥ 450°C.

20. The lighting device as claimed in any one of the preceding claims 1 to 19, **characterized in that** the frit material is on metal, glass or glass ceramics basis.

21. The lighting device as claimed in any of the preceding claims 1 to 20, **characterized in that** the frit material is selected from glass or glass ceramic material.

22. The lighting device as claimed in any of the preceding claims 1 to 21, **characterized in that** the frit material is a Pb-borate composite glass.

23. The lighting device as claimed in any of the preceding claims 1 to 22, **characterized in that** the frit material is selected from glass material, which is preferably lead free.

24. The lighting device as claimed in any of the preceding claims 1 to 23, **characterized in that** the frit material is a lead free Bi-Zn-borate composite glass.

25. The lighting device as claimed in any of the preceding claims 1 to 24, **characterized in that** the frit material is a composite glass on phosphate basis,

26. The lighting device as claimed in any of the preceding claims 1 to 25, **characterized in that** the lamp base is made from an electrically conductive material, e.g, a metal, or an electrically insulating material, e.g. a ceramic material, preferably selected from kovar, alloy 42, aluminum nitride, glass or glass cermics.

27. The lighting device as claimed in any of the preceding claims 1 to 26, **characterized in that** the material of the frit material is selected from a passivating material.

28. The lighting device as claimed in any of the preceding claims 1 to 27, **characterized in that** the material of the frit material has a Tg over 500°C.

29. The lighting device as claimed in any of the preceding claims 1 to 28, **characterized in that** the lamp base comprises at least one tube sealed in to evacuate the atmosphere inside the body or to fill gas inside the body or bulb after the sealing.

30. The lighting device as claimed in any of the preceding claims 1 to 29, **characterized in that** the body of the lighting device is the outer or second body which surrounds the inner or first body comprising the light emitting unit.

31. The lighting device according to any one of the preceding claims 1 to 30, **characterized in that** the lighting device is a temperature radiator.

32. The lighting device according to claim 31, **characterized in that** the temperature radiator is a light bulb or halogen light.

33. The lighting device according to claim 31 or 32, **characterized in that** the primary light emitting of the temperature radiator results from a heated coil of tungsten metal or alloy, surrounded by an inert gas, particularly Kr, Ar, Xe or halide.

34. The lighting device according to claim 31 to 33, **characterized in that** the gas pressure inside the lighting device is up to 25 bar during operation.

35. The lighting device according to claim 31, **characterized in that** the lighting device is a discharge lamp.

36. The lighting device according to claim 35, **characterized in that** the discharge lamp comprises a discharge compartiment and the discharge compartlment is filled with a discharge component such as mercury and/or rare earth metal ions and/or Xn.

37. The lighting device according to claim 36, **characterized in that** the discharge compartiment comprises a discharge body.

38. The lighting device according to claim 37, **characterized in that** the body is provided inside with a flourescence layer serving to convert the UV ratio of the discharging process, particularly the UV ratio of mercury, into visual light.

39. The lighting device according to claim 34 to 38, **characterized in that** the body comprises filler gas and the filler gas has a pressure of up to 200 bar or more.

40. The lighting device according to claim 35, **characterized in that** the lighting device is a metal halide discharge lamp.

41. The lighting device according to claim 35, **characterized in that** the lighting device comprises an inner bulb provided with a burner system.

42. A method of joining a lamp body to a lamp base in a lighting device, particularly a high-pressure metal halide lamp, comprising:
- a light emitting unit;
- a body surrounding the light emitting unit, preferably in form of a bulb,
- a lamp base comprising at least one current supply or pin,
the lamp base being connected with the body via a frit material in a gas-tight manner,
wherein a material combination of the body, frit and base materials is selected such that
a. the Coefficient of Thermal Expansion of the material of the frit material (CTE_{frit}) matches with the Coefficients of Thermal Expansion of the material of the lamp base (CTE_{base}) and the material of the body (CTE_{body}), respectively,
or
b. the material of the frit (CTE_{frit}) bridges with the Coefficients of Thermal Expansion of the material of the lamp base (CTE_{base}) and the material of the body (CTE_{body}), respectively,
at least at the joining surfaces of the body, frit and base materials, to sustain a hermetic bonding and withstand pressure and temperature conditions, having the following steps:
the frit material is applied on the bonding or joining surfaces of the body and
base material to be bonded and the bonding or joining is obtained using one of the following processes
a) in thermal manner, e.g. heater
b) by short-wave infrared radiation
c) by laser melting
d) by high frequency heating.

43. The method according to claim 42, **characterized in that** the frit material is selected from metal, glass or glass ceramic basis.

44. The method according to claim 42 or 43, **characterized in that**
(1) the material of the body or bulb is metallised at the bottom with a suitable material;
(2) the lamp base is plated with suitable materials; and
(3) the bond is achieved by standard metal solders.

45. The method as claimed in claim 44, **characterized in that** the suitable material in step (1) is selected from gold or sliver.

46. The method as claimed in claim 44, **characterized in that** the suitable material in step (2) is selected from Ni and/or Au.

47. The method as claimed in claim 44, **characterized in that** the standard metal solders in step (3) is selected from CuAgPd or AuSn,

48. The method as claimed in any of the preceding claims 44 to 47, **characterized in that** the bond in step (3) is achieved in either inert atmosphere or vacuum.

49. The method as claimed in any of the preceding claims 42 to 48, **characterized in that** the body is the outer or second body which surrounds the inner or first body comprising the light emitting unit.
